# EUROPÄISCHE PATENTSCHRIFT

(11) **EP 1 720 273 B1**
(45) Veröffentlichungstag und Bekanntmachung des Hinweises auf die Patenterteilung: **28.07.2010**
(21) Anmeldenummer: 05009853.2
(22) Anmeldetag: 04.05.2005
(51) Int. Cl.: H04L 1/00, H04L 1/18

(54) **Verfahren zur Codierung von Datenblöcken**
Method for encoding of datablocks
Procédé pour le codage de blocs de données

(43) Veröffentlichungstag der Anmeldung: 08.11.2006
(73) Patentinhaber: Nokia Siemens Networks GmbH & Co. KG, 81541 München (DE)
(72) Erfinder: Costa, Elena, Dr., 81379 München (DE); Schulz, Egon, Dr., 80993 München (DE); Trifonov, Peter, 195256 St.-Petersburg (RU)

(56) Entgegenhaltungen:
- EP-A- 1 096 710
- EP-A- 1 337 066
- US-A- 6 167 031

## Beschreibung

Die Erfindung betrifft ein Verfahren zur Codierung von Datenblöcken für eine Übertragung in einem Funkkommunikationssystem.

Bei Mobilfunknetzen der dritten und vierten Generation gewinnen so genannte "Mehrträger"-Übertragungsverfahren zunehmend an Bedeutung, bei denen mehrere Träger gleichzeitig moduliert werden. Ein typisches Mehrträger-Übertragungsverfahren ist das so genannte "Orthogonal Frequency Division Multiplexing, OFDM" - Funkübertragungsverfahren, bei dem als "Subcarrier" bezeichnete Träger zur Übertragung von Symbolen verwendet werden. Ein Mehrträger-Übertragungsverfahren bietet den Vorteil einer hohen Datenratenübertragung bei einem geringen Empfängeraufwand. Außerdem ist es sehr robust gegenüber zeitlichen Schwankungen von Eigenschaften des Funkübertragungskanals.

Bei einer Vielzahl von Funkübertragungsverfahren - so auch bei einer OFDM-Funkübertragung - werden Funkübertragungsressourcen verwendet, die als so genannte "chunks" bezeichnet werden. Ein "chunk" wird dimensioniert durch eine Anzahl an Multiträgern bzw. Subcarrier einerseits und durch einen definierten, den Mutliträgern bzw. Subcarrier zuordenbaren Zeitabschnitt andererseits. Beispielsweise werden mehrere benachbarte Subcarrier zur Dimensionierung eines "chunks" verwendet.

Bei diesen Verfahren wird eine begrenzte Bit-Anzahl jeder Funkübertragungsressource zur Übertragung zugeordnet. Den Bits einer Funkübertragungsressource wiederum werden zusätzliche Steuerinformationen zugeordnet, die als so genannter "signaling overhead" mit übertragen werden. Nachteilig reduzieren derartige Steuerinformationen einen als "Payload" bezeichneten Nutzdatendurchsatz.

Die Dimensionen eines "chunks" werden in Abhängigkeit von Funkübertragungskanaleigenschaften festgelegt. Die Funkübertragungskanaleigenschaften werden beispielsweise durch Kanalschätzverfahren ermittelt. Je nach Funkübertragungskanaleigenschaften erfolgt eine senderseitige Anpassung einer Sendeleistung und/oder einer gewählten Modulation des Sendesignals sowie die Auswahl geeigneter Subcarrier bzw. Multiträger.

Vorteilhaft wird ein betrachteter "chunks" hinsichtlich eines so genannten "flat fading" im Frequenzbereich und eines konstanten zeitlichen Verhaltens im Zeitbereich dimensioniert. Durch die Dimensionierung ist es möglich, die durchzuführende Funkübertragung an die Eigenschaften des Funkübertragungskanals adaptiv anzupassen.

Bei einer Funkübertragung sind außerdem so genannte "Quality-of-Service, QoS" - Anforderungen, die von Wünschen bzw. von gewählten Diensten eines Teilnehmers abhängig sind, einzuhalten.

Zur adaptiven Anpassung der Funkübertragung an die Eigenschaften des Funkübertragungskanals und zur Erfüllung der QoS-Anforderungen werden Codierverfahren bzw. Fehlerkorrekturcodes verwendet. Dabei ist ein erzielbarer Nutzdatendurchsatz vom verwendeten Codierverfahren abhängig, da beispielsweise bei einer sehr sicheren Datenübertragung mit einem aufwändigen Fehlerkorrekturcode eine hohe Anzahl an Redundanzbits zu übertragen ist.

Wird zur Codierung beispielsweise ein so genannter "Turbocode, TC" oder ein so genannter "Low Density Parity Check Code, LDPC" verwendet, so wird für eine qualitativ gute Übertragung eine relativ lange Codefolge benötigt.

Wird im Rahmen einer OFDM-Funkübertragung eine niedrige Modulation, beispielsweise eine BSPSK-Modulation, verwendet, so kann damit nur eine maximale Bitanzahl von 64 Bits pro "chunk" übertragen werden.

Im Hinblick auf diese maximale Bitanzahl könnte zur Codierung der Bits eine kurze Codefolge verwendet werden, wodurch jedoch ein Datenverlust bei der Übertragung die Folge sein könnte.

Soll hingegen eine lange Codefolge verwendet werden und werden die codierten Bits nachfolgend auf die "chunks" aufgeteilt, so wäre es nur schwer möglich, eine geeignete Codelänge für jeweilige Modulationen aufzufinden. Eine unabhängige Anpassung von Codierung einerseits und einer adaptiv einstellbaren Modulation andererseits ist für eine gewünschte optimale Nutzdatenübertragung nur schwer möglich.

Zur Codierung wird typischerweise eine Anzahl von Fehlerkorrekturcodes mit verschiedenen Codelängen bereitgestellt und eine Kompromissauswahl in Abhängigkeit zwischen Fehlerkorrekturmöglichkeit einerseits und Verzögerungen bei der Nutzdatenübertragung im Rahmen der QoS-Anforderungen andererseits getroffen. Dann werden Datenblöcke codiert und auf zur Verfügung stehende "chunks" abgebildet bzw. aufgeteilt.

Aus der Druckschrift US 6,167,031 ist ein Verfahren zum Auswählen von möglichen Modulations- und Codiertechniken bekannt, bei dem durch eine statistische Auswertung verschiedene Kombinationen von Modulations- und Codiertechniken betrachtet und dabei jeweils Übertragungsqualitäten ermittelt werden. Nachfolgend wird diejenige Kombination für eine Datenübertragung verwendet, welche die beste Übertragungsqualität für einen Nutzer ermöglicht.

Es ist Aufgabe der vorliegenden Erfindung, ein Verfahren zur Codierung von Datenblöcken, die mittels eines Mehrträger-Übertragungsverfahrens in einem Funkkommunikationssystem übertragen werden sollen, anzugeben, bei dem einerseits die Codierung und andererseits die Anpassung der Funkübertragung an die Eigenschaften des Funkübertragungskanals optimiert einstellbar ist.

Diese Aufgabe wird durch die Merkmale des Patentanspruchs 1 gelöst. Vorteilhafte Weiterbildungen sind in den Unteransprühen angegeben.

Beim erfindungsgemäßen Verfahren werden Datenblöcke in Abhängigkeit von vorgegebenen Quality-of-Service-Anforderungen bei einer so genannten "äußeren" Codierung mit einem ersten, "äußeren" Code verschlüsselt bzw. codiert.

Nachfolgend werden die mit dem äußeren Code verschlüsselten Datenblöcke bei einer so genannten "inneren" Codierung mit einem zweiten, "inneren" Code erneut verschlüsselt bzw. kodiert. Diese zweite Codierung erfolgt in Abhängigkeit von Eigenschaften bzw. Funkkanaleigenschaften derjenigen "chunks", die zur Übertragung verwendet werden sollen.

Erfindungsgemäß wird die äußere Codierung in einem als "link layer" bezeichneten Layer 2 und die innere Codierung in einem als "physical layer" bezeichneten Layer 1 durchgeführt.

Die äußere Codierung erfolgt bevorzugt mit einem Fehlerkorrekturcode, dessen Codelängen bzw. Coderate flexibel einstellbar ist. Die Einstellung erfolgt angepasst an die jeweilige Länge und angepasst an Fehlerkorrekturanforderungen eines Layer 2 - Datenblocks bzw. Datenpakets.

Die innere Codierung erfolgt bevorzugt in Abhängigkeit von einer gewählten Modulation, die zur Funkübertragung verwendet wird. So könnte beispielsweise ein so genannter "coset code" oder eine "trellis code" Modulation verwendet werden.

Durch das erfindungsgemäße Verfahren wird eine adaptive und optimale Annäherung einer Coderate pro "chunk" an die Eigenschaften von Funkübertragungskanälen bzw. "chunks" verwirklicht.

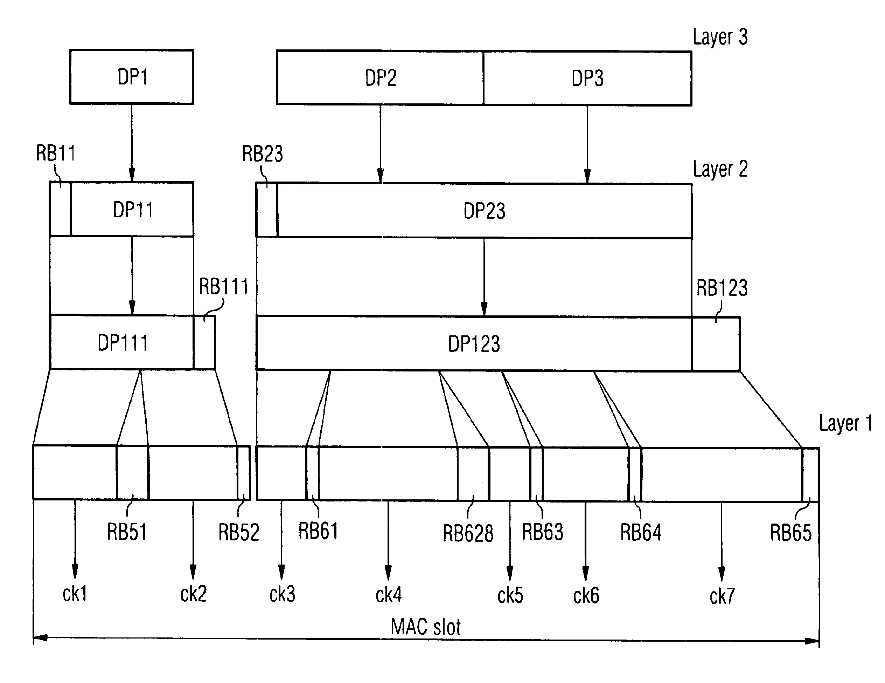

Nachfolgend wird die Erfindung anhand einer Zeichnung näher erklärt. Dabei zeigt FIG 1 das erfindungsgemäße Verfahren anhand von drei Datenpaketen bzw. Datenblöcken DP1, DP2 und DP3 eines OFDM-Funkkommunikationssystems.

Zwei Datenblöcke DP2 und DP3 eines Layer 3 werden im Layer 2 zu einem Datenblock DP23 als Link-Layer-Datenblock zusammengefasst, während der Datenblock DP1 des Layers 3 als Datenblock DP11 zum Layer 2 gelangt.

Der Datenblock DP11 weist einen Header RB11 und der Datenblock DP23 weist einen Header RB23 auf, wobei jeder Header RB11, RB23 einen jeweiligen CRC-Code und Kontrollinformationen beinhaltet.

Der Datenblock DP11 wird zusammen mit dem Header RB11 einer äußeren Codierung zugeführt, während der Datenblock DP23 zusammen mit dem Header RB23 einer äußeren Codierung zugeführt wird. Die äußere Codierung wird unter Berücksichtigung einer Quality-of-Service-Anforderung und einer gewählten Verkehrsklasse ausgewählt.

Zur äußeren Codierung könnte beispielsweise auch ein trivialer Fehlerkorrekturcode verwendet werden, wenn die einem "chunk" zugeordnete Codelänge dazu geeignet ist, die Fehlerkorrekturanforderungen eines betrachteten Datenpakets zu erfüllen.

Durch die äußere Kodierung wird aus dem Datenblock DP11 und dem Header RB11 ein neuer Datenblock DP111 gebildet, der Redundanzbits innerhalb eines Bereichs RB111 aufweist.

Durch die äußere Kodierung wird aus dem Datenblock DP23 und dem Header RB23 ein neuer Datenblock DP123 gebildet, der Redundanzbits innerhalb eines Bereichs RB123 aufweist.

Der Datenblock DP111 und dessen Redundanzbereich RB111 wird einer Aufteilung und einer inneren Codierung zugeführt, wobei diese in Abhängigkeit von den Eigenschaften der zu verwendenden Funkübertragungsressourcen "chunks" ck1 und ck2 erfolgt. Dabei ergeben sich weitere Redundanzbits in Bereichen RB51 und RB52.

Der Datenblock DP123 und dessen Redundanzbereich RB123 wird einer Aufteilung und einer inneren Codierung zugeführt, wobei diese in Abhängigkeit von den Eigenschaften der zu verwendenden Funkübertragungsressourcen "chunks" ck3 bis ck7 erfolgt. Dabei ergeben sich weitere Redundanzbits in Bereichen RB61 bis RB65.

Abschließend erfolgen die Modulation und die Abbildung auf die jeweiligen Trägerfrequenzen bzw. Subcarrier in Abhängigkeit von Funkübertragungskanaleigenschaften.

Bei einer OFDM-Funkübertragung wird empfängerseitig eine Softoutput-Decodierung des "inneren" Codes durchgeführt. Bei denjenigen "chunks", die ein vollständiges Layer 2 - Datenpaket tragen, wird auf die Softoutput-Information verzichtet.
Hard-Decision-Werte werden beibehalten, Layer 2 - Header werden verifiziert und die gebildeten Payload-Daten bzw. Nutzdaten werden zum Network-Layer übertragen.

Bei denjenigen "chunks", die nur einen Teil eines Layer 2 - Datenpakets tragen, werden die Softoutput-Informationen gesammelt und zur Decodierung des äußeren Codes verwendet. Nach erfolgreicher Decodierung des äußeren Codes erfolgt eine Verifizierung des Layer 2 - Header. Dann werden die Payload-Daten zum Network-Layer übergeben.

In einer vorteilhaften Weiterbildung der Erfindung werden nachfolgend drei Verfahren für eine "Automatic Repeat Request, ARQ" Wiederholung beschrieben.

Bei einem ersten ARQ-Verfahren werden nur die fehlerhaft decodierten Codeworte des inneren Codes erneut übertragen.

Bei einem zweiten ARQ-Verfahren werden zusätzliche Überprüfungsbits, die für den äußeren Code generiert wurden, zusammen mit dem inneren Code codiert und mit übertragen.

Bei einem dritten ARQ-Verfahren wird das gesamte Codewort erneut übertragen.

Mit Bezug auf FIG 1 ist dies beispielsweise das Codewort, das den "chunks" ck1 und ck2 zugeordnet ist oder das Codewort, das den "chunks" ck3 bis ck7 zugeordnet ist.

Mit Hilfe des erfindungsgemäßen Verfahrens wird eine gemeinsame Implementierung von Funktionen eines Physical-Layers und eines Link-Layers durchgeführt und eine adaptive Übertragung realisiert.

Kurze Datenpakete, die geringe Übertragungszeiten benötigen, werden nur mit dem inneren Code codiert und übertragen, auf die äußere Codierung kann dann verzichtet werden.

Längere Datenpakete hingegen werden zur Realisierung eines besseren Fehlerschutzes zunächst durch den äußeren Code verschlüsselt und das Codewort über mehrere "chunks" aufgeteilt übertragen. Die Adaption erfolgt an den Funkübertragungskanal bzw. an dessen Eigenschaften durch den inneren Code.

In einer vorteilhaften Weiterbildung wird eine Funkübertragungsressource bzw. "chunk" durch mindestens zwei Teilnehmer verwendet und ist somit diesen Teilnehmern zugeordnet. Die Teilnehmer sind dabei beispielsweise durch unterschiedliche CDMA-Codes oder durch unterschiedliche Codierungen unterscheidbar.

In einer vorteilhaften Weiterbildung kann der erste und/oder der zweite Code seitens eines Teilnehmers im Rahmen der Quality-of-Service-Anforderungen eingestellt bzw. ausgewählt werden. Vorteilhaft werden dazu dem Teilnehmer geeignete Codekombination aus erstem und zweitem Code angeboten.

## Patentansprüche

1. Verfahren zur Codierung von Datenblöcken (DP11, DP23) für eine Übertragung in einem Funkkommunikationssystem,
- bei dem zumindest ein Datenblock (DP11, DP23) in Abhängigkeit von vorgegebenen Quality-of-Service-Anforderungen mit einem ersten Code kodiert wird, und
- bei dem der mit dem ersten Code kodierte Datenblock (DP111, DP123) in Abhängigkeit von Funkübertragungseigenschaften einer zu verwendenden Funkübertragungsressource (ck1-ck7) mit einem zweiten Code kodiert wird.
**dadurch gekennzeichnet, dass**
die erste Codierung in einem Layer 2 und die zweite Codierung in einem Layer 1 des verwendeten Übertragungsverfahrens erfolgt.

2. Verfahren nach Anspruch 1, bei dem zur Funkübertragung ein Multiträger-Übertragungsverfahren verwendet wird.

3. Verfahren nach Anspruch 2, bei dem ein OFDM-Übertragungsverfahren mit Subträgern zur Funkübertragung verwendet wird.

4. Verfahren nach Anspruch 2 oder 3, bei dem die Funkübertragungsressource durch Multiträger einerseits und durch eine den Multiträgern zuordenbaren Zeitabschnitt andererseits dimensioniert wird.

5. Verfahren nach Anspruch 4, bei dem benachbarte Subträger zur Dimensionierung der Funkübertragungsressource verwendet werden.

6. Verfahren nach einem der vorhergehenden Ansprüche, bei dem zur ersten Codierung ein Fehlerkorrekturcode verwendet wird, dessen Codelänge und/oder Coderate flexibel einstellbar ist, wobei die Einstellung an eine jeweilige Länge und an die Fehlerkorrekturanforderungen eines Layer 2 - Datenblocks erfolgt.

7. Verfahren nach einem der vorhergehenden Ansprüche, bei dem der erste und/oder der zweite Code seitens eines Teilnehmers im Rahmen der Quality-of-Service-Anforderungen eingestellt wird.

8. Verfahren nach einem der vorhergehenden Ansprüche, bei dem die zweite Codierung in Abhängigkeit einer gewählten Modulation des Übertragungsverfahrens erfolgt.

9. Verfahren nach einem der vorhergehenden Ansprüche, bei dem der mit dem ersten und mit dem zweiten Code codierte Datenblock auf eine Anzahl von zu verwendender Funkübertragungsressourcen aufgeteilt wird.

10. Verfahren nach einem der vorhergehenden Ansprüche, bei dem der Datenblock (DP23), der mit dem ersten Code verschlüsselt werden soll, im Layer 2 aus mehreren Datenblöcken (DP2, DP3) eines Layer 3 zusammengesetzt wird.

11. Verfahren nach einem der vorhergehenden Ansprüche, bei dem im Rahmen eines ARQ-Verfahrens nur fehlerhaft decodierte Codeworte des zweiten Codes erneut übertragen werden.

12. Verfahren nach einem der vorhergehenden Ansprüche, bei dem im Rahmen eines ARQ-Verfahrens zusätzliche Überprüfungsbits, die für den ersten Code generiert wurden, zusammen mit dem zweiten Code codiert und übertragen werden.

13. Verfahren nach einem der vorhergehenden Ansprüche, bei dem im Rahmen eines ARQ-Verfahrens ein gesamtes Codewort, das auf die Funkübertragungsressourcen zur Übertragung aufgeteilt wurde, erneut übertragen wird.

14. Verfahren nach einem der vorhergehenden Ansprüche, bei dem eine Funkübertragungsressource (ck1-ck7) mindestens zwei Teilnehmern zugeordnet wird, die durch unterschiedliche Codierung unterscheidbar sind.

15. Anordnung mit Mitteln, welche zur Durchführung des Verfahrens nach einem der Ansprüche 1 bis 14 geeignet sind.

## Claims

1. Method for encoding data blocks (DP11, DP23) for transmission in a radio communication system,
- in which at least one data block (DP11, DP23) is encoded using a first code on the basis of predefined quality of service requirements, and
- in which the data block (DP111, DP123) which has been encoded using the first code is encoded using a second code on the basis of radio transmission properties of a radio transmission resource (ck1-ck7) to be used,
**characterized in that** the first encoding operation is carried out in a layer 2 and the second encoding operation is carried out in a layer 1 of the transmission method used.

2. Method according to Claim 1, in which a multicarrier transmission method is used for radio transmission.

3. Method according to Claim 2, in which an OFDM transmission method with subcarriers is used for radio transmission.

4. Method according to Claim 2 or 3, in which the radio transmission resource is dimensioned, on the one hand, by multicarriers and, on the other hand, by a time slot which can be assigned to the multicarriers.

5. Method according to Claim 4, in which adjacent subcarriers are used to dimension the radio transmission resource.

6. Method according to one of the preceding claims, in which an error correction code whose code length and/or code rate can be set in a flexible manner is used for the first encoding operation, the setting operation being carried out in a manner adapted to a respective length and to the error correction requirements of a layer 2 data block.

7. Method according to one of the preceding claims, in which the first and/or second code is/are set by a subscriber as part of the quality of service requirements.

8. Method according to one of the preceding claims, in which the second encoding operation is carried out on the basis of selected modulation of the transmission method.

9. Method according to one of the preceding claims, in which the data block which has been encoded using the first and second codes is divided among a number of radio transmission resources to be used.

10. Method according to one of the preceding claims, in which the data block (DP23) which is intended to be encrypted using the first code is assembled, in layer 2, from a plurality of data blocks (DP2, DP3) of a layer 3.

11. Method according to one of the preceding claims, in which only incorrectly decoded code words of the second code are transmitted again as part of an ARQ method.

12. Method according to one of the preceding claims, in which additional check bits which were generated for the first code are encoded and transmitted together with the second code as part of an ARQ method.

13. Method according to one of the preceding claims, in which an entire code word which has been divided among the radio transmission resources for transmission is transmitted again as part of an ARQ method.

14. Method according to one of the preceding claims, in which a radio transmission resource (ck1-ck7) is assigned to at least two subscribers which can be distinguished using different encoding.

15. Arrangement having means which are suitable for carrying out the method according to one of Claims 1 to 14.

## Revendications

1. Procédé de codage de blocs de données (DP11, DP23) pour une transmission dans un système de radiocommunication, dans lequel
- au moins un bloc de données (DP11, DP23) est codé avec un premier code en fonction d'exigences de qualité de service prédéterminées et
- le bloc de données (DP111, DP123) codé avec le premier code est codé avec un deuxième code en fonction de caractéristiques de transmission radio d'une ressource de transmission radio (ck1-ck7) à utiliser,
**caractérisé en ce que**
le premier codage s'effectue dans une couche 2 et le deuxième codage, dans une couche 1 du procédé de transmission utilisé.

2. Procédé selon la revendication 1, dans lequel est utilisé, pour la transmission radio, un procédé de transmission multi-porteuses.

3. Procédé selon la revendication 2, dans lequel est utilisé, pour la transmission radio, un procédé de transmission OFDM en sous-porteuses.

4. Procédé selon la revendication 2 ou 3, dans lequel la ressource de transmission radio est dimensionnée par des multi-porteuses, d'une part, et par un intervalle de temps pouvant être affecté aux multi-porteuses, d'autre part.

5. Procédé selon la revendication 4, dans lequel des sous-porteuses voisines sont utilisées pour dimensionner la ressource de transmission radio.

6. Procédé selon l'une des revendications précédentes, dans lequel est utilisé, pour le premier codage, un code de correction d'erreur dont la longueur de code et/ou le taux de code peuvent être réglés de manière flexible, le réglage se faisant sur une longueur respective et sur les exigences en matière de correction d'erreur d'un bloc de données de la couche 2.

7. Procédé selon l'une des revendications précédentes, dans lequel le premier et/ou le deuxième code sont réglés par un usager dans le cadre des exigences de qualité de service.

8. Procédé selon l'une des revendications précédentes, dans lequel le deuxième codage est effectué en fonction d'une modulation choisie du procédé de transmission.

9. Procédé selon l'une des revendications précédentes, dans lequel le bloc de données codé avec le premier code et avec le deuxième code est réparti sur un nombre de ressources de transmission radio à utiliser.

10. Procédé selon l'une des revendications précédentes, dans lequel le bloc de données (DP23) à crypter avec le premier code est assemblé dans la couche 2 à partir de plusieurs blocs de données (DP2, DP3) d'une couche 3.

11. Procédé selon l'une des revendications précédentes, dans lequel sont seuls de nouveau transmis, dans le cadre d'un procédé ARQ, des mots de code du deuxième code décodés avec des erreurs.

12. Procédé selon l'une des revendications précédentes, dans lequel sont codés et transmis conjointement avec le deuxième code, dans le cadre d'un procédé ARQ, des bits de contrôle additionnels qui ont été générés pour le premier code.

13. Procédé selon l'une des revendications précédentes, dans lequel est de nouveau transmis, dans le cadre d'un procédé ARQ, tout un mot de code qui a été réparti sur les ressources de transmission radio aux fins de la transmission.

14. Procédé selon l'une des revendications précédentes, dans lequel une ressource de transmission radio (ck1-ck7) est affectée à au moins deux usagers qu'il est possible de distinguer par un codage différent.

15. Dispositif comportant des moyens qui sont adaptés pour exécuter le procédé selon l'une des revendications 1 à 14.
